# FASCICULE DE BREVET EUROPEEN

(11) **EP 3 360 176 B1**
(45) Date de publication et mention de la délivrance du brevet: **31.07.2019**
(21) Numéro de dépôt: 16777989.1
(22) Date de dépôt: 05.10.2016
(51) Int. Cl.: H01M 2/10, H01M 10/42, H01M 10/6551, H01G 11/10, H01G 11/18, H01G 11/78, H01G 11/82

(54) **PROCÉDÉ DE FABRICATION D'UN MODULE DE STOCKAGE D'ÉNERGIE ÉLECTRIQUE**
VERFAHREN ZUR HERSTELLUNG EINES MODULS ZUR SPEICHERUNG VON ELEKTRISCHER ENERGIE
METHOD FOR PRODUCING AN ELECTRICAL ENERGY STORAGE MODULE

(30) Priorité: 05.10.2015 FR 1559425
(43) Date de publication de la demande: 15.08.2018
(73) Titulaire: Blue Solutions, 29500 Ergué Gabéric (FR)
(72) Inventeur: JUVENTIN, Anne-Claire, 44600 Saint-Nazaire (FR); CAUMONT, Olivier, 29000 Quimper (FR)
(74) Mandataire: Regimbeau
(86) Numéro de dépôt international: PCT/EP2016/073762
(87) Numéro de publication internationale: WO 2017/060284

(56) Documents cités:
- EP-A1- 2 403 050
- EP-A2- 2 072 308
- EP-A2- 2 639 853
- US-A1- 2014 242 436

## Description

### DOMAINE TECHNIQUE GENERAL

L'invention se situe dans le domaine technique général de la fabrication d'un module de stockage d'énergie électrique. Un tel module comprend une enveloppe externe parallélépipédique qui contient une pluralité d'ensembles de stockage d'énergie électrique.

La présente invention concerne plus précisément un tel module, destiné à tout type d'applications, aussi bien stationnaires (par exemple l'utilisation du module dans un bâtiment ou un abri, etc..) que mobiles (par exemple l'utilisation du module dans un véhicule terrestre, tel qu'un tram, un bus ou une voiture). À ce titre, un tel module doit pouvoir être positionné selon de nombreuses orientations, notamment pour pouvoir s'adapter aux différents agencements et aux différentes dimensions associées aux différentes applications.

L'invention concerne également un procédé de fabrication d'un tel module.

Un "module" est un ensemble comprenant une pluralité d'éléments de stockage d'énergie, disposés côte à côte et reliés électriquement, généralement en série. Il permet de fournir en un seul bloc des ensembles d'éléments de stockage d'énergie supportant une tension plus importante et fournissant une capacité de stockage plus importante que des éléments unitaires.

Par ailleurs, dans la suite de la description et des revendications, on entend par "ensemble de stockage d'énergie électrique", soit un condensateur (c'est-à-dire un système passif comprenant deux électrodes et un isolant), soit un supercondensateur (c'est-à-dire un système comprenant au moins deux électrodes, un électrolyte et au moins un séparateur), notamment de type hybride (c'est-à-dire comprenant une électrode de type connu sous l'acronyme « EDLC », de l'anglais « electric double-layer capacitor », c'est-à-dire condensateur à double couche électrochimique - et une électrode de type batterie au lithium), soit une batterie de type batterie au lithium (c'est-à-dire un système comprenant au moins une anode, au moins une cathode et un électrolyte liquide ou solide entre l'anode et la cathode).

### ETAT DE L'ART

On connaît déjà d'après le document US2014/0242436, un tel module de stockage d'énergie électrique, qui comprend une enveloppe externe parallélépipédique contenant des ensembles de stockage d'énergie électrique. L'enveloppe externe est constituée d'un manchon réalisé par extrusion et découpé selon la longueur du module que l'on souhaite fabriquer, ce manchon étant obturé à chacune de ses deux extrémités par une plaque. La paroi de ce manchon est conformée de façon à présenter, en section transversale, une forme à plusieurs lobes en portion d'arc de cercle, chaque lobe épousant une partie du contour des éléments de stockage d'énergie cylindriques.

Un tel module ne permet toutefois de stocker au maximum que deux rangées superposées d'éléments de stockage d'énergie, pour que chacun de ces éléments puisse être au contact de la paroi du manchon.

De plus, les éléments de stockage d'énergie positionnés au milieu (par exemple au milieu d'une rangée de trois éléments disposés côte à côte ou au milieu d'un alignement de trois éléments montés les uns derrière les autres, comme on peut le voir sur la figure 2 de ce document) sont peu maintenus par le manchon. Un tel module ne peut donc pas être positionné sur la tranche, sans risques de dégâts pour les éléments de stockage d'énergie. En effet, ceux-ci risqueraient de s'affaisser les uns sur les autres, ce qui pourrait provoquer des courts-circuits.

En outre, le manchon joue également un rôle de conducteur thermique pour évacuer la chaleur. Le refroidissement des éléments de stockage d'énergie positionnés au milieu est donc médiocre puisque leur surface de contact avec le manchon est faible.

Selon une variante de réalisation de ce module, il est possible d'y ajouter un matériau de remplissage, apte à transmettre la chaleur vers l'extérieur, ce matériau remplissant certains ou tous les espaces existants entre l'enveloppe externe et les éléments de stockage d'énergie.

Toutefois, ce document ne décrit absolument pas un module conforme à l'invention, dans lequel les éléments de stockage d'énergie sont maintenus en place par deux couches de résine placées uniquement à leurs extrémités respectives.

On connaît également d'après le document EP2639853 un module contenant des batteries. Ce module comprend un boîtier en matériau isolant dont le fond et le couvercle présentent des cloisons de partition de faible hauteur, qui délimite des espaces de réception des extrémités des batteries.

La surface intérieure de ces espaces est recouverte d'une couche de mousse. Comme on peut le voir sur les figures de ce document, la couche de mousse est d'une hauteur plus importante sur les parois du module que sur les cloisons, ce qui signifie que la couche de mousse est bien formée avant la mise en place des batteries et non après la fermeture du module.

Les batteries sont insérées dans les espaces du boîtier par le haut, en pressant la couche de mousse puis le couvercle est appliqué sur l'ensemble. Les batteries sont ainsi maintenues en place.

Toutefois, ce dispositif ne permet pas de s'adapter aisément aux variations de tolérance de fabrication des batteries, de sorte que dans certains cas la batterie peut ne pas rentrer dans l'espace prévu à cet effet ou inversément elle peut être insuffisamment retenue.

De plus, ce document n'évoque absolument pas la problématique d'évacuation de la chaleur produite par les batteries.

On connaît aussi d'après le document EP2403050 un dispositif comprenant un coffre contenant une pluralité de générateurs électrochimiques au lithium. Une mousse ignifuge rigide électriquement isolante remplit l'espace entre la paroi interne du coffre et la surface extérieure des générateurs.

La mousse ignifuge réalise une excellente isolation thermique, ce qui est le contraire du but recherché par l'invention. L'emploi d'une résine est déconseillé par ce document.

On connait également d'après le document WO 2012/078727 un module de stockage d'énergie dont les éléments sont autoportés et simplement insérés entre deux rails et deux plaques d'extrémité.

Une telle structure ne permet qu'un positionnement "à plat", c'est-à-dire sur le fond, mais non sur n'importe quel côté du module.

Il existe également des modules dont l'enveloppe est réalisée en matière plastique. Dans ce type de module, l'enveloppe plastique fait notamment office d'élément de protection contre les intempéries climatiques mais ne permet pas le refroidissement des cellules. En outre l'enveloppe à elle seule ne permet pas d'assurer la protection contre les courants électromagnétiques. Enfin, l'outillage nécessaire au moulage de ce type d'enveloppe est cher.

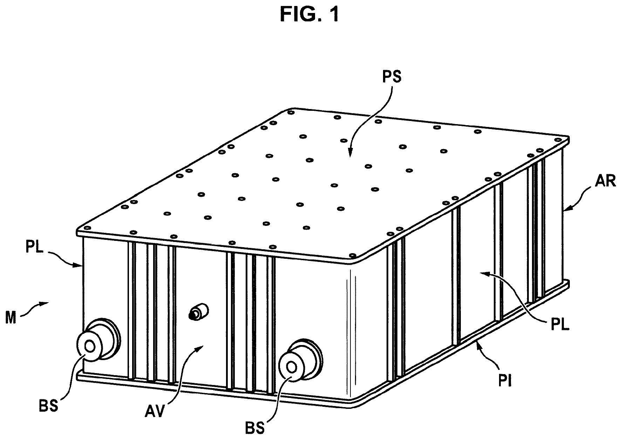

On connait enfin un module, tel que celui représenté sur la figure 1 jointe, fabriqué par la demanderesse. Un tel module M comprend une enveloppe constituée de dix pièces de profilés extrudés, assemblées à l'aide d'au moins une soixantaine de vis, afin de définir une paroi inférieure PI, une paroi supérieure PS, une paroi avant AV, une paroi arrière AR, deux parois latérales longitudinales PL, ainsi que des cloisons intérieures. Le module comprend deux bornes de sortie BS, situées sur sa paroi avant AV et qui permettent sa connexion au dispositif à alimenter en énergie.

Pour certaines applications, ce module M est considéré comme trop lourd, trop coûteux et difficilement industrialisable du fait de la grande quantité de pièces et de vis à assembler.

En outre, les dimensions des profilés extrudés utilisés sont limitées par la capacité des presses d'extrusion. Pour les modules de grandes dimensions, cela suppose la multiplication du nombre de pièces extrudées.

De plus, le calage interne des éléments de stockage d'énergie électrique se fait uniquement par l'intermédiaire de pièces souples, du type anneaux de caoutchouc.

Ce module, actuellement équipé d'éléments de stockage d'énergie du type supercondensateurs fonctionne très bien. Toutefois, il n'est pas conçu pour être placé dans d'autres positions que la position dite « à plat », c'est-à-dire celle sur laquelle le module M repose sur sa paroi inférieure Pl.

D'autres positions d'emploi de ce module M, comme par exemple avec les bornes de sortie BS dirigées vers le haut (c'est-à-dire avec le module positionné sur sa paroi arrière AR) ou bien un positionnement sur la tranche (c'est-à-dire avec le module placé sur l'une de ses parois latérales PL), risquent de provoquer l'affaissement des éléments de stockage d'énergie à l'intérieur du module.

Ceci peut entrainer une perte d'étanchéité au niveau des bornes de sortie BS, ainsi que des courts-circuits par endommagement des systèmes d'isolation électrique internes, sous l'effet des nouvelles contraintes mécaniques liées à la position d'emploi du module.

### PRESENTATION DE L'INVENTION

L'invention a pour objectif de résoudre les inconvénients précités de l'état de la technique.

L'invention a donc pour objectif de fournir un module de stockage d'énergie électrique comprenant une enveloppe parallélépipédique, à l'intérieur de laquelle sont stockés plusieurs éléments de stockage d'énergie électrique, ce module pouvant être positionné sur quatre de ses six faces, c'est-à-dire sa paroi inférieure PI, sa paroi arrière AR et ses deux parois latérales PL, voire éventuellement sur sa paroi avant AV, même si dans ce cas l'accès aux bornes de sortie BS est plus difficile.

Cet objectif doit être atteint tout en fournissant un module résistant mécaniquement et qui soit moins lourd, moins coûteux et moins complexe à fabriquer que les modules connus de l'état de la technique.

En outre, cette amélioration de la résistance mécanique et cette possibilité d'utilisation dans des positions multiples ne doit pas se faire au détriment de la qualité de l'isolation électrique du module. Un tel module doit pouvoir continuer à être utilisé même avec des tensions élevées, tout en étant protégé contre les champs électromagnétiques.

Enfin, de façon avantageuse, un autre objectif de l'invention est également de fournir un module tel que précité, dont le refroidissement des éléments de stockage d'énergie électrique est assuré de façon correcte.

À cet effet, l'invention concerne la fabrication d'un module de stockage d'énergie électrique contenant des éléments de stockage d'énergie électrique telle que décrite dans la revendication 1.

Conformément à l'invention, ce module comprend :
- une enveloppe parallélépipédique en tôle métallique à l'intérieur de laquelle sont logés lesdits éléments de stockage d'énergie électrique, ladite enveloppe comprenant un fond assemblé à un capot à cinq faces,
- au moins une carte électronique, disposée dans un élément de façade, lui-même fixé sur l'une des faces de ladite enveloppe parallélépipédique,
et lesdits éléments de stockage d'énergie électrique sont maintenus en place et immobilisés dans l'enveloppe par une première couche de résine qui s'étend depuis ledit fond sur une partie uniquement de la hauteur desdits éléments de stockage d'énergie électrique et par une seconde couche de résine qui s'étend depuis l'une des faces du capot sur une partie uniquement de la hauteur desdits éléments de stockage d'énergie électrique.

Grâce à ces caractéristiques de l'invention, le module peut être positionné sur sa paroi inférieure, sa paroi arrière, sa paroi avant ou ses parois latérales. Les éléments de stockage d'énergie sont maintenus par la résine et ne risquent pas de s'affaisser les uns sur les autres.

L'emploi de tôle, de préférence fine, permet d'alléger le poids total du module. Toutefois, cette tôle, combinée à la résine, suffit à maintenir correctement les éléments de stockage d'énergie.

La résine combinée à l'utilisation d'une enveloppe en métal (bon conducteur thermique), facilite l'évacuation de la chaleur des éléments de stockage d'énergie électrique vers l'extérieur.

La résine renforce également l'étanchéité du module.

Le fait d'avoir une carte électronique disposée dans un élément de façade à l'extérieur de l'enveloppe permet en outre de ne pas avoir à accéder à l'intérieur de celle-ci et de ne pas dégrader le calage des éléments de stockage d'énergie dans cette enveloppe.

Grâce à l'ensemble des caractéristiques de l'invention, le module est optimisé en termes de masse, coûts et étanchéité.

Selon d'autres caractéristiques avantageuses et non limitatives de l'invention, prises seules ou en combinaison :
- le module comprend deux lumières ménagées dans l'enveloppe pour l'injection de la résine dans l'enveloppe, et de préférence des bouchons de fermeture des deux lumières ;
- les deux lumières sont formées sur la face avant du capot, l'une située à proximité du fond et l'autre située à proximité de la face supérieure du capot ;
- les deux lumières sont formées l'une dans le fond, l'autre dans la face supérieure du capot ;
- ladite enveloppe est étanche aux liquides et à la poussière ;
- l'enveloppe est réalisée dans une tôle métallique dont l'épaisseur est au maximum de 5 mm ;
- le module comprend une âme, de préférence centrale, formant entretoise, disposée entre le fond et le capot perpendiculairement à ceux-ci ;
- la résine s'étend sur 5% à 20%, de préférence sur 5% à 12%, de la hauteur des éléments de stockage d'énergie électrique ;
- la paroi de son enveloppe comporte une surface en créneaux ;
- l'enveloppe comporte sur au moins l'une de ses faces, plusieurs éléments dissipateurs de chaleur, tels que des ailettes de refroidissement, de préférence soudés sur cette face ;
- l'élément de façade comprend une partie arrière et une partie avant munies de moyens d'assemblage permettant de les assembler pour former une enceinte de réception de ladite carte électronique, ladite partie arrière étant réalisée en un matériau électriquement isolant et étant munie de moyens de fixation sur l'une des faces de l'enveloppe et la partie avant étant réalisée en un matériau électriquement conducteur, notamment en métal ;
- l'élément de façade est percé d'orifices permettant le passage des bornes de sortie, de polarité positive et négative, dudit module.

L'invention concerne également un procédé de fabrication de ce module de stockage d'énergie électrique, qui comprend les étapes consistant à :
- assembler les éléments de stockage d'énergie électrique par paires à l'aide de barrettes de connexion,
- réaliser les câblages électriques et mettre en place les isolants de façon à former un bloc de puissance isolé,
- placer ledit bloc de puissance à l'intérieur de l'enveloppe,
- assembler le fond et le capot de ladite enveloppe,
- injecter de la résine au travers d'une première lumière de l'enveloppe pour former ladite première couche de résine,
- attendre la polymérisation de la résine,
- retourner le module,
- injecter de la résine au travers d'une seconde lumière de l'enveloppe pour former une seconde couche de résine,
- fixer l'élément de façade contenant la carte électronique sur l'enveloppe.

### PRESENTATION DES FIGURES

D'autres caractéristiques et avantages de l'invention apparaîtront de la description qui va maintenant en être faite, en référence aux dessins annexés, qui en représentent, à titre indicatif mais non limitatif, un mode de réalisation possible.

Sur ces dessins :
- la figure 1 est un schéma en perspective représentant un module de stockage d'énergie électrique conforme à l'état de la technique,
- la figure 2 est une vue en perspective éclatée, représentant un exemple de réalisation du module de stockage d'énergie électrique conforme à l'invention,
- la figure 3 est une vue en perspective représentant le module de la figure 2 en position assemblée,
- la figure 4 est une vue schématique, en coupe, d'une portion du module conforme à l'invention,
- la figure 5 est une vue de dessus, en perspective, de l'intérieur de l'enveloppe du module conforme à l'invention,
- la figure 6 est une vue de détail éclatée, en perspective, d'un élément de façade permettant le stockage de la carte électronique du module conforme à l'invention,
- la figure 7 est une vue de détail de ce même module montrant le montage d'une borne de sortie,
- la figure 8 est une vue de détail et en coupe d'une partie du module de stockage conforme à l'invention, et
- la figure 9 est une vue en coupe partielle du module de stockage conforme à l'invention.

### DESCRIPTION DETAILLEE DE L'INVENTION

Un exemple d'un mode de réalisation du module conforme à l'invention va maintenant être décrit en faisant référence aux figures.

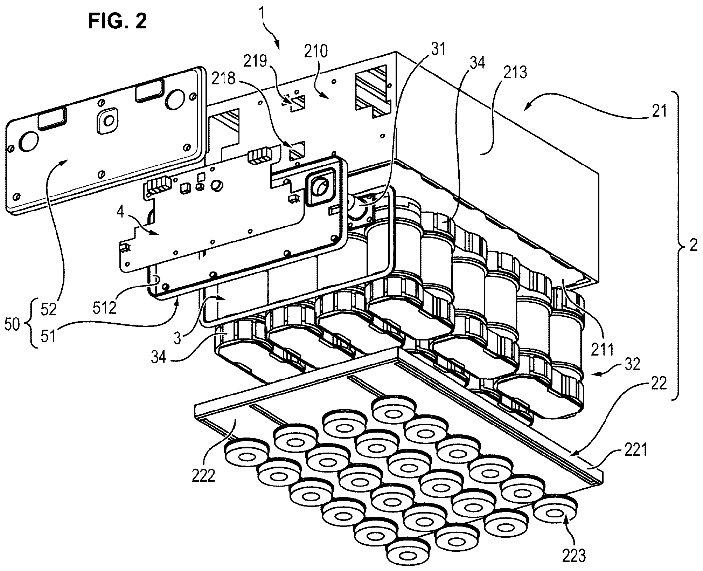

Sur la figure 2, on peut voir que le module 1 comprend une enveloppe parallélépipédique 2, à l'intérieur de laquelle sont logés plusieurs éléments de stockage d'énergie électrique 3.

En outre, au moins une carte électronique 4, de préférence une seule, disposée à l'intérieur d'un élément de façade 50, permet notamment de gérer le fonctionnement desdits éléments de stockage 3 et donc du module 1.

Les différents éléments constitutifs de ce module vont maintenant être décrits plus en détail.

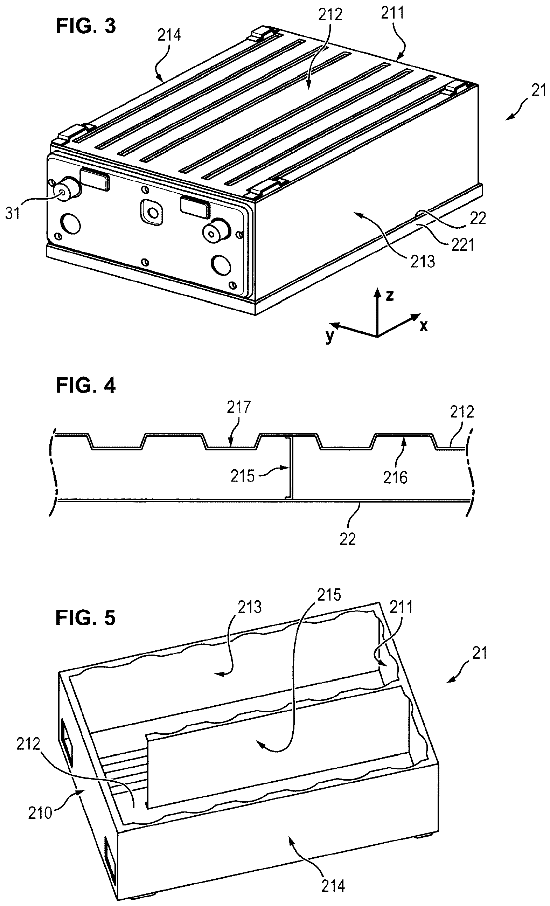

L'enveloppe 2 comprend un capot 21 à cinq faces et un fond 22, destinés à être assemblés l'un avec l'autre, comme représenté sur la figure 3, afin de délimiter une enceinte, à l'intérieur de laquelle sont logés les éléments de stockage d'énergie électrique 3.

Le capot 21 et le fond 22 sont réalisés dans un matériau, de préférence, électriquement conducteur, et, de préférence, dans une tôle métallique fine, par exemple en aluminium ou en acier. Son épaisseur est de préférence inférieure à 5 millimètres, de préférence encore comprise entre 0,5 mm et 5 mm. La tôle est de préférence d'une épaisseur constante. Toutefois, une tôle avec des zones d'épaisseurs variables est utilisable.

Comme on peut le voir sur les figures 2, 3 et 5, le capot 21 présente cinq faces, à savoir une face avant 210, une face arrière opposée 211, une face supérieure 212 et deux faces latérales longitudinales 213, 214.

De façon avantageuse, ce capot 21 est obtenu par découpage d'une tôle plane de façon à délimiter les quatre faces perpendiculaires à la face supérieure 212, puis par pliage et par soudure des différentes faces le long de leurs arêtes respectives. En fonction des dimensions du capot 21, l'emboutissage est également envisageable.

De façon avantageuse, la tôle peut être conformée, de préférence avant son pliage, par exemple par emboutissage, de façon à présenter une surface en créneaux, comme cela apparaît mieux sur la figure 4. En d'autres termes, la tôle est déformée de façon à présenter alternativement des portions rectilignes en saillie 216 et des portions rectilignes en creux ou gorges 217.

Une telle structure permet de réaliser un renfort mécanique de la tôle fine et donc du module, sans augmenter le poids de celui-ci.

De façon avantageuse, une âme 215, de préférence centrale, relie le fond 22 à la face supérieure 212 du capot 21, comme cela apparaît mieux sur les figures 4 et 5. Cette âme centrale 215 s'étend sur au moins une partie de la longueur, voire de la largeur du capot 21. Elle présente de préférence une section en C, les branches du C étant solidarisées, de préférence par soudure, au capot 21 et à la face supérieure 212.

Cette âme centrale 215 fait office de renfort et de raidisseur du module. Sa disposition à l'intérieur du capot 21 et le positionnement de ses points d'ancrage sont choisis de façon à optimiser le maintien mécanique recherché, notamment vis-à-vis des sollicitations vibratoires, des chocs, des sollicitations électriques provoquant un gonflement des éléments 3, etc.

Un tel capot 21 remplace à lui seul neuf pièces d'un module de l'état de la technique. Il permet ainsi d'obtenir un gain de masse optimal.

Le fond 22 est avantageusement réalisé à partir d'une tôle fine, de forme carrée ou rectangulaire, dont les bords 221 sont repliés. Ceci permet d'avoir un fond qui vient coiffer les faces latérales 213, 214, avant 210 et arrière 211 du capot 21.

De façon avantageuse, le capot 21 et le fond 22 sont assemblés par exemple par encliquetage ou à l'aide de quelques vis.

Le fond 22 présente de préférence une face plane extérieure 222, sur laquelle sont de préférence disposés des éléments de dissipation de chaleur 223, tels que des ailettes de refroidissement (voir figure 2).

De façon avantageuse, ces ailettes de refroidissement 223 présentent un contour circulaire et sont disposées à la verticale des éléments de stockage d'énergie 3 qui sont disposés eux-mêmes à l'intérieur de l'enveloppe 2. Ces ailettes de refroidissement sont par exemple soudées sur le fond 22. Ceci permet une réduction du coût de module, par rapport à ceux de l'art antérieur, dans lesquels les ailettes de refroidissement sont obtenues par usinage dans la masse.

Les ailettes 223 peuvent également être soudées par soudage par résistance (ou soudage « SR »), par soudage par friction malaxage, rivetées par rivetage autopoinçonneur ou être brasées par exemple. Les ailettes 223 peuvent aussi être collées à l'aide d'un adhésif thermiquement conducteur, cette action étant complétée ou non par l'une des fixations mécaniques précitées.

On notera que des éléments dissipateurs de chaleur pourraient également être prévus sur les faces du capot 21.

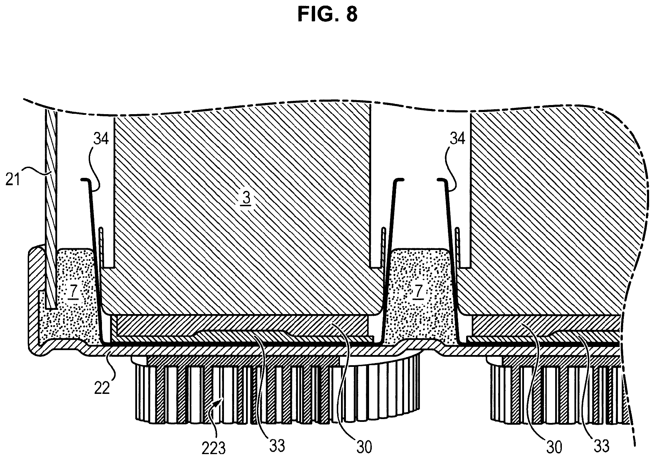

Sur la figure 2, les éléments de stockage d'énergie 3 sont reliés entre eux successivement deux à deux par une barrette de connexion 30, (visible uniquement sur la figure 8), pour un montage généralement en série, et les deux éléments de stockage d'énergie 3 situés aux deux d'extrémités du montage en série sont en outre reliés chacun par une barrette de connexion de forme appropriée, respectivement à une borne de sortie positive et à une borne de sortie négative du module. Ces deux bornes de sortie sont référencées 31.

Ces bornes de sortie 31 permettent la connexion du module 1 à un dispositif à alimenter en énergie.

L'élément de façade 50 est aisément démontable de façon à permettre l'accès à la carte électronique 4, notamment en cas d'opérations de maintenance à effectuer sur celle-ci. Le positionnement de la carte électronique 4 hors de l'enveloppe 2 rend son accès plus simple, puisqu'il n'est plus nécessaire de démonter ladite enveloppe, comme cela est le cas dans les dispositifs connus de l'état de la technique.

Dans la variante de réalisation représentée sur les figures 2, 3, 6 et 7, l'élément de façade 50 contenant la carte électronique 4 est fixé sur la face avant 210 de l'enveloppe 2. Toutefois, il est également possible de positionner cet élément de façade 50, par exemple contre l'une des faces latérales 213, 214.

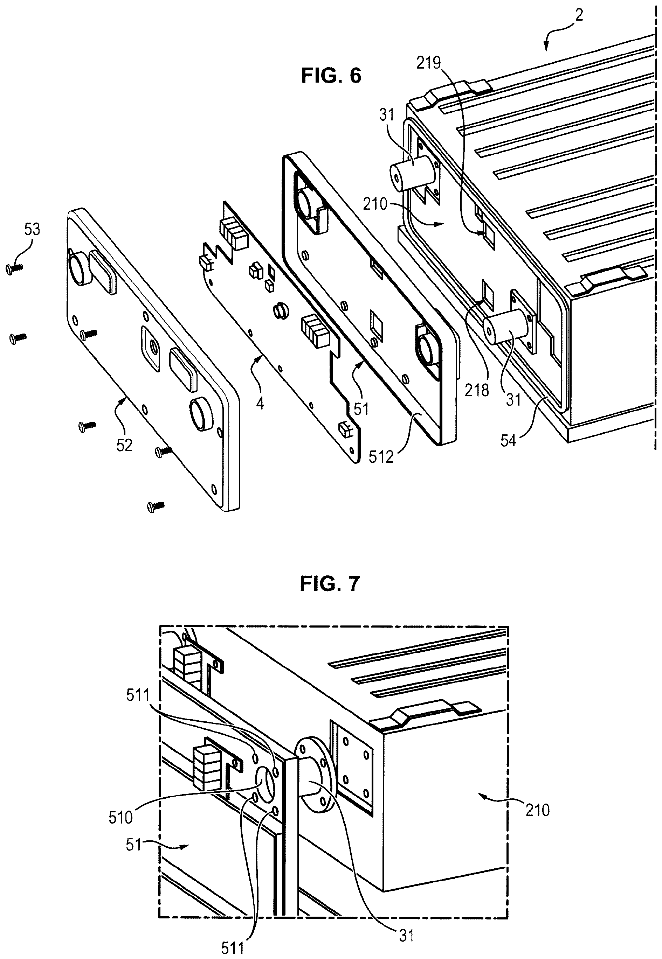

Comme cela apparaît mieux sur la figure 6, l'élément de façade 50 comprend une partie arrière 51 et une partie avant 52, assemblées de façon à définir une enceinte de réception de ladite carte électronique 4.

La partie arrière 51 présente une forme générale parallélépipédique, munie de préférence de rebords périphériques 512. Elle est réalisée dans un matériau électriquement isolant, tel qu'une matière plastique. Elle joue le rôle d'interface entre la carte électronique 4 et l'enveloppe 2. Elle contribue notamment à l'isolation électrique des différents réseaux de tension (haute tension, basse tension et masse). Elle permet également de séparer physiquement la carte électronique 4 des éléments de stockage d'énergie 3.

De façon avantageuse, cette partie arrière 51 peut intégrer des moyens de fixation, tels que des moyens d'encliquetage, sur l'une des faces, de préférence la face avant 210, de l'enveloppe. De tels moyens ne sont pas visibles sur les figures.

En outre, cette partie arrière 51 peut intégrer un connecteur (connu sous le terme de connecteur « fond de panier »), qui permet d'assurer la connexion entre la connectique venant de l'intérieur du module 1 et la carte électronique 4.

De façon avantageuse, et comme cela apparaît mieux sur la figure 7, la partie arrière 51 peut être utilisée pour maintenir les bornes de sortie 31 ou « bornes de puissance » du module 1. À cet effet, la partie 51 peut être munie d'un orifice central 510 pour le passage de la borne 31 et de plusieurs orifices 511 pour le passage de vis de fixation. La borne de sortie 31 est ainsi retenue entre la partie 51 et la face avant 210.

La partie avant 52 est avantageusement réalisée en un matériau électriquement conducteur, tel que du métal, de préférence de l'aluminium ou de l'acier. De préférence, on utilisera la même tôle que celle servant à réaliser le capot 21 et le fond 22.

La partie avant 52 présente une forme similaire à la partie arrière 51.

La partie avant 52 est configurée pour pouvoir être assemblée à la partie arrière 51 par tout moyen de fixation approprié, par exemple à l'aide de vis 53.

La partie avant 52 permet de protéger la carte électronique 4 contre les chocs et les courants électromagnétiques. Elle contribue également à l'étanchéité du module, aux liquides et aux gaz.

On notera qu'avec la structure qui vient d'être décrite, le module 1 présente ainsi deux plans de joint principaux, à savoir un premier entre le capot 21 et le fond 22 à la périphérie de celui-ci et l'autre entre l'élément de façade 50 et la face du module contre laquelle cet élément de façade est appliqué. Dans le premier cas, un joint d'étanchéité peut être prévu dans un plan unique. Dans le deuxième cas, un joint d'étanchéité 54, peut être prévu entre la partie arrière 51 et la face avant 210, (voir figure 6). Dans les deux cas, ceci simplifie ainsi la structure du joint et sa mise en oeuvre. Le module est ainsi plus étanche, plus robuste et plus fiable.

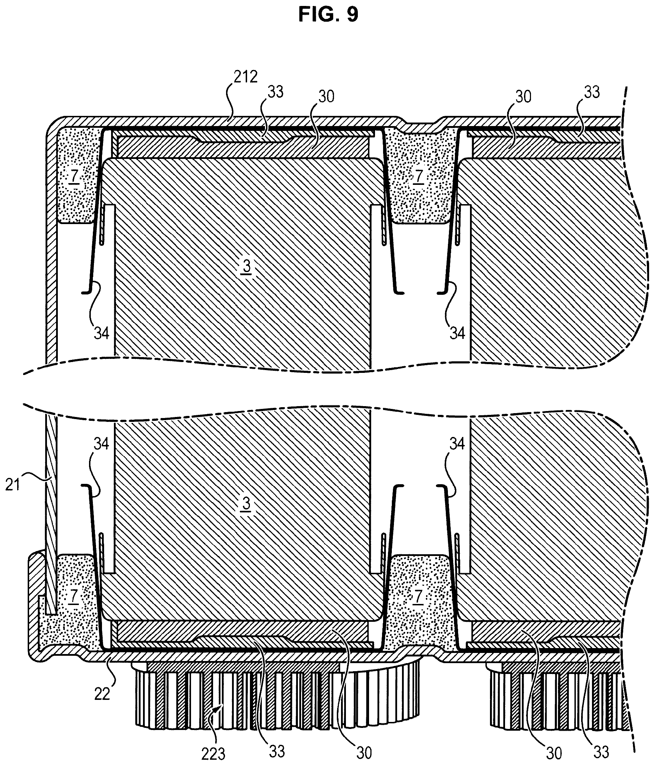

Conformément à l'invention, les éléments de stockage 3 sont maintenus en place à l'intérieur de l'enveloppe 2, et immobilisés à l'intérieur de celle-ci, par une couche de résine 7 qui s'étend uniquement sur une partie de leur hauteur, comme représenté sur les figures 8 et 9.

Comme on peut le voir sur cette figure, la résine 7 comble les espaces existant entre deux éléments de stockage d'énergie 3 contigus, ainsi qu'entre ces éléments de stockage d'énergie 3 et le capot 21 et/ou le fond 22.

Une telle résine 7 permet notamment le blocage des éléments de stockage d'énergie 3 suivant l'axe longitudinal x et l'axe latéral y (voir figure 3) du module. Le blocage selon l'axe vertical z peut par exemple être réalisé en utilisant un élément en mousse disposé à l'extrémité verticale des éléments de stockage d'énergie 3, opposée à celle se trouvant au contact du fond 22. On pourra se reporter à ce sujet au document FR2916306.

Conformément à l'invention, on forme une première couche de résine 7, depuis le fond 22 et sur une partie de la hauteur des éléments de stockage d'énergie 3, de préférence sur une hauteur comprise entre 5% et 20% et de préférence encore entre 5% et 12% de leur hauteur. On forme également une seconde couche de résine 7 depuis la face supérieure 212 du capot 21 sur une partie seulement de la hauteur des éléments de stockage d'énergie 3, par exemple sur 5% à 20% de leur hauteur, de préférence entre 5% et 12% de leur hauteur.

De préférence, des éléments de stockage d'énergie électrique 3 sont maintenus uniquement par la première et la seconde couches de résine 7 précitées, c'est-à-dire qu'il n'y a pas de couche de résine au niveau de la partie centrale de l'élément 3.

De préférence, la résine 7 est choisie de façon à avoir au moins l'une des propriétés suivantes :
- avoir une bonne conductivité thermique, de façon à transmettre la chaleur générée par les éléments 3, à l'enveloppe 2,
- avoir une densité la plus faible possible, de façon à ne pas grever le poids du module,
- être suffisamment souple pour conserver son intégrité face aux contraintes mécaniques (vibrations, chocs, etc) et aux contraintes thermiques,
- être ininflammable, opaque et ne pas émettre de fumée toxique, selon les normes applicables en vigueur dans ce type de module,
- présenter un niveau d'isolation électrique suffisant pour ne pas dégrader le système d'isolation du module,
- présenter une bonne accroche sur l'aluminium si ce matériau est utilisé pour l'enveloppe 2.

De préférence, cette résine est du polyuréthane ou du silicone.

Une telle résine permet de bloquer les éléments 3 tout en admettant des tolérances géométriques plus larges.

Elle renforce encore la liaison entre le fond 22 et le capot 21, en limitant ainsi le nombre de vis nécessaires au maintien mécanique de l'enveloppe.

Elle permet également d'améliorer les performances de refroidissement du module par son effet de masse.

Elle participe également à l'étanchéité entre les deux éléments de l'enveloppe. Le fond 22, muni de ses rebords 221, fait en outre office de bac de rétention pour la résine 7 avant la polymérisation de celle-ci.

Enfin, cette résine 7 est d'un coût raisonnable.

Selon l'invention, les différents éléments constituant le module de stockage 1, tels que représentés sur les figures 2 à 9, sont assemblés comme suit.

Les différents éléments de stockage d'énergie électrique 3 sont assemblés entre eux deux à deux à l'aide des barrettes de connexion 30, de façon à former un bloc de puissance 32, c'est-à-dire un ensemble de ces éléments 3.

Ensuite, le câblage électrique de ce bloc de puissance 32 est réalisé, de façon à raccorder les éléments de stockage d'énergie électrique 3 situés aux extrémités du montage en série, à la carte électronique 4.

Les différents isolants électriques 33, 34 des éléments de stockage d'énergie électrique 3 sont ensuite mis en place. Il s'agit par exemple d'une couche d'élastomère 33 isolant électrique et de coupelles 34 en polypropylène (PP) disposées aux deux extrémités des éléments 3, (voir figures 8 et 9).

Le bloc de puissance, référencé 32, est alors disposé sur le fond en tôle 22, déjà équipé des ailettes de refroidissement 223, s'il en possède dans le mode de réalisation envisagé.

Le capot 21 est ensuite positionné sur le fond 22 et ces deux éléments sont assemblés de façon à enserrer le bloc de puissance.

Il est possible d'insérer entre les deux un joint d'étanchéité.

On procède ensuite à la formation de la première couche de résine 7 au travers d'une lumière 218 (figure 2), ménagée dans l'enveloppe 2, par exemple dans la face avant 210, à proximité du fond 22. On laisse la résine polymériser pendant le temps nécessaire, qui peut être par exemple de 24 heures au minimum et qui est fonction du type de résine utilisée.

On procède ensuite au retournement du module 1 de façon à ce que le fond 22 se trouve orienté vers le haut, puis on réalise la deuxième couche de résine 7 par injection au travers d'une lumière 219 (figure 2), ménagée dans l'enveloppe 2, par exemple dans la face avant 210, à proximité de la face supérieure 212.

Les lumières 218, 219 peuvent également servir au passage de câbles électriques joignant l'intérieur du module à la carte électronique 4.

On attend la fin de la polymérisation de la résine, comme pour la couche 7 précédente.

Selon une autre variante de réalisation non représentée sur les figures, les coupelles 34 sont supprimées et la résine 7 vient alors au contact des barrettes de connexion 30 et des couches d'élastomère 33.

On fixe ensuite la partie arrière 51 de l'élément de façade 50 contre l'une des parois de l'enveloppe 2, par exemple la face avant 210, comme représenté sur les figures. Cette fixation est réalisée en insérant de préférence entre les deux un joint d'étanchéité.

Ceci permet également d'obturer les lumières 218, 219. Des bouchons de fermeture peuvent également être prévus pour obturer les lumières 218, 219.

On installe ensuite la carte électronique 4 et on la connecte électriquement au bloc de puissance 32. On fixe également les bornes de sortie 31 au travers des orifices 510.

On fixe alors la partie avant 52 de l'élément de façade 50 contre la partie arrière 51, en ayant disposé entre les deux un joint d'étanchéité.

On constate donc que le montage de ce module est extrêmement simplifié.

Selon une variante de réalisation, on notera qu'un ou plusieurs orifices ou lumières pourraient être prévus soit dans le fond 22, soit sur la face supérieure 212 du capot 21, pour permettre l'introduction de la résine 7. Dans ce cas, il serait nécessaire de prévoir un bouchon de fermeture de cet (ou de ces) orifice(s).

## Revendications

1. Procédé de fabrication d'un module (1) de stockage d'énergie électrique contenant des éléments de stockage d'énergie électrique (3), ce module (1) comprenant :
- une enveloppe (2) parallélépipédique en tôle métallique, à l'intérieur de laquelle sont logés lesdits éléments de stockage d'énergie électrique (3), ladite enveloppe (2) comprenant un fond (22) assemblé à un capot (21) à cinq faces, lesdits éléments de stockage d'énergie électrique (3) étant maintenus en place et immobilisés dans l'enveloppe (2) par une première couche de résine (7) qui s'étend depuis ledit fond (22) sur une partie uniquement de la hauteur desdits éléments de stockage d'énergie électrique (3) et par une seconde couche de résine (7) qui s'étend depuis l'une des faces du capot (21) sur une partie uniquement de la hauteur desdits éléments de stockage d'énergie électrique (3),
- au moins une carte électronique (4), disposée dans un élément de façade (50), lui-même fixé sur l'une des faces de ladite enveloppe parallélépipédique (2),
**caractérisé en ce qu'**il comprend les étapes consistant à :
- assembler les éléments de stockage d'énergie électrique (3) par paires à l'aide de barrettes de connexion (30),
- réaliser les câblages électriques et mettre en place les isolants de façon à former un bloc de puissance (32) isolé,
- placer ledit bloc de puissance (32) à l'intérieur de l'enveloppe (2),
- assembler le fond (22) et le capot (21) de ladite enveloppe (2),
- injecter de la résine (7) au travers d'une première lumière de l'enveloppe (2) pour former ladite première couche de résine (7),
- attendre la polymérisation de la résine,
- retourner le module (1),
- injecter de la résine (7) au travers d'une seconde lumière de l'enveloppe (2) pour former une seconde couche de résine (7),
- fixer l'élément de façade (5) contenant la carte électronique (4) sur l'enveloppe (2).

2. Procédé de fabrication selon la revendication 1, **caractérisé en ce que** le module (1) comprend deux lumières ménagées dans l'enveloppe (2), et de préférence des bouchons de fermeture des deux lumières et **en ce que** l'injection de la résine (7) s'effectue au travers des deux lumières.

3. Procédé de fabrication selon la revendication 2, **caractérisé en ce que** les deux lumières sont formées sur la face avant (210) du capot (21), l'une (218) située à proximité du fond (22) et l'autre (219) située à proximité de la face supérieure (212) du capot (21).

4. Procédé de fabrication selon la revendication 2, **caractérisé en ce que** les deux lumières sont formées l'une dans le fond (22), l'autre dans la face supérieure (212) du capot (21).

5. Procédé de fabrication selon l'une des revendications précédentes, **caractérisé en ce que** ladite enveloppe (2) est étanche aux liquides et à la poussière.

6. Procédé de fabrication selon l'une des revendications précédentes, **caractérisé en ce que** l'enveloppe (2) est réalisée dans une tôle métallique dont l'épaisseur est au maximum de 5 mm.

7. Procédé de fabrication selon l'une des revendications précédentes, **caractérisé en ce que** le module (1) comprend une âme (215), de préférence centrale, formant entretoise, disposée entre le fond (22) et le capot (21) perpendiculairement à ceux-ci.

8. Procédé de fabrication selon l'une des revendications précédentes, **caractérisé en ce que** la résine (7) s'étend sur 5% à 20%, de préférence 5% à 12%, de la hauteur des éléments de stockage d'énergie électrique (3).

9. Procédé de fabrication selon l'une des revendications précédentes, **caractérisé en ce que** la paroi de son enveloppe (2) comporte une surface en créneaux (216, 217).

10. Procédé de fabrication selon l'une des revendications précédentes, **caractérisé en ce que** l'enveloppe (2) comporte, sur au moins l'une de ses faces, plusieurs éléments dissipateurs de chaleur (223), tels que des ailettes de refroidissement, de préférence soudés sur cette face.

11. Procédé de fabrication selon l'une des revendications précédentes, **caractérisé en ce que** l'élément de façade (50) comprend une partie arrière (51) et une partie avant (52) munies de moyens d'assemblage permettant de les assembler pour former une enceinte de réception de ladite carte électronique (4), ladite partie arrière (51) étant réalisée en un matériau électriquement isolant et étant munie de moyens de fixation sur l'une des faces de l'enveloppe (2) et la partie avant (52) étant réalisée en un matériau électriquement conducteur, notamment en métal.

12. Procédé de fabrication selon l'une des revendications précédentes, **caractérisé en ce que** l'élément de façade (50) est percé d'orifices permettant le passage des bornes de sortie (31), de polarité positive et négative, dudit module.

## Patentansprüche

1. Verfahren zur Herstellung eines Speichermoduls (1) elektrischer Energie, enthaltend Speicherelemente elektrischer Energie (3), wobei dieses Modul (1) umfasst:
- einen parallelepipedischen Mantel (2) aus Metallblech, in dessen Inneren die Speicherelemente elektrischer Energie (3) untergebracht sind, wobei der Mantel (2) einen Boden (22) umfasst, der mit einer Abdeckung (21) mit fünf Flächen verbunden ist, wobei die Speicherelemente elektrischer Energie (3) von einer ersten Harzschicht (7), die sich ab dem Boden (22) über einen Teil nur der Höhe der Speicherelemente elektrischer Energie (3) erstreckt und von einer zweiten Harzschicht (7), die sich ab einer der Flächen der Abdeckung (21) über einen Teil nur der Höhe der Speicherelemente elektrischer Energie (3) erstreckt, in dem Mantel (2) am Platz und immobilisiert gehalten werden,
- mindestens eine elektronische Karte (4), die in einem Fassadenelement (50) angeordnet ist, das selbst auf einer der Flächen des parallelepipedischen Mantels (2) befestigt ist,
**dadurch gekennzeichnet, dass** es die Schritte umfasst, die darin bestehen:
- paariges Verbinden der Speicherelemente elektrischer Energie (3) mit Hilfe von Verbindungsleisten (30),
- Durchführen der elektrischen Verkabelungen und Platzieren der Isolierungen derart, dass ein isolierter Leistungsblock (32) gebildet wird,
- Platzieren des Leistungsblocks (32) in das Innere des Mantels (2),
- Verbinden des Bodens (22) und der Abdeckung (21) des Mantels (2),
- Einleiten von Harz (7) durch einen ersten Durchbruch des Mantels (2), um die erste Harzschicht (7) zu bilden,
- Abwarten der Polymerisation des Harzes,
- Umdrehen des Moduls (1),
- Einleiten von Harz (7) durch einen zweiten Durchbruch des Mantels (2), um eine zweite Harzschicht (7) zu bilden,
- Befestigen des Fassadenelements (5), welches die elektronische Karte (4) enthält, auf dem Mantel (2).

2. Herstellungsverfahren nach Anspruch 1, **dadurch gekennzeichnet, dass** das Modul (1) zwei Durchbrüche umfasst, die in den Mantel (2) eingearbeitet sind, und vorzugsweise Verschlussstopfen der zwei Durchbrüche und dass das Einleiten des Harzes (7) durch die zwei Durchbrüche erfolgt.

3. Herstellungsverfahren nach Anspruch 2, **dadurch gekennzeichnet, dass** die zwei Durchbrüche auf der vorderen Fläche (210) der Abdeckung (21) gebildet sind, wobei sich der eine (218) in der Nähe des Bodens (22) befindet und der andere (219) in der Nähe der oberen Fläche (212) der Abdeckung (21) befindet.

4. Herstellungsverfahren nach Anspruch 2, **dadurch gekennzeichnet, dass** die zwei Durchbrüche, der eine in dem Boden (22), der andere in der oberen Fläche (212) der Abdeckung (21), ausgebildet sind.

5. Herstellungsverfahren nach einem der vorangehenden Ansprüche, **dadurch gekennzeichnet, dass** der Mantel (2) gegenüber Flüssigkeiten und Staub dicht ist.

6. Herstellungsverfahren nach einem der vorangehenden Ansprüche, **dadurch gekennzeichnet, dass** der Mantel (2) aus einem Metallblech hergestellt ist, dessen Stärke maximal 5 mm beträgt.

7. Herstellungsverfahren nach einem der vorangehenden Ansprüche, **dadurch gekennzeichnet, dass** das Modul (1) einen vorzugsweise zentralen Kern (215) umfasst, der eine Strebe bildet, die zwischen dem Boden (22) und der Abdeckung (21) senkrecht zu diesen angeordnet ist.

8. Herstellungsverfahren nach einem der vorangehenden Ansprüche, **dadurch gekennzeichnet, dass** sich das Harz (7) über 5% bis 20%, vorzugsweise 5% bis 12%, der Höhe der Speicherelemente elektrischer Energie (3) erstreckt.

9. Herstellungsverfahren nach einem der vorangehenden Ansprüche, **dadurch gekennzeichnet, dass** die Wand seines Mantels (2) eine gezackte Oberfläche (216, 217) aufweist.

10. Herstellungsverfahren nach einem der vorangehenden Ansprüche, **dadurch gekennzeichnet, dass** der Mantel (2) auf mindestens der einen seiner Flächen mehrere Wärmeableitelemente (223) wie Kühlflügel aufweist, die vorzugsweise auf diese Fläche geschweißt sind.

11. Herstellungsverfahren nach einem der vorangehenden Ansprüche, **dadurch gekennzeichnet, dass** das Fassadenelement (50) einen hinteren Teil (51) und einen vorderen Teil (52) umfasst, die mit Verbindungsmitteln ausgestattet sind, welche erlauben, sie zu verbinden, um einen Aufnahmebereich der elektronischen Karte (4) zu bilden, wobei der hintere Teil (51) aus einem elektrisch isolierenden Material hergestellt ist und mit Befestigungsmitteln auf der einen der Flächen des Mantels (2) ausgestattet ist und der vordere Teil (52) aus einem elektrisch leitenden Material, vor allem aus Metall, hergestellt ist.

12. Herstellungsverfahren nach einem der vorangehenden Ansprüche, **dadurch gekennzeichnet, dass** das Fassadenelement (50) von Öffnungen durchbrochen ist, welche den Durchgang von Ausgangsklemmen (31) mit positiver und negativer Polarität des Moduls erlauben.

## Claims

1. A method for producing an electrical energy storage module (1) containing electrical energy storage elements (3), this module (1) comprising:
- a parallelepiped casing (2) made of sheet metal, inside of which are housed said electrical energy storage elements (3), said casing (2) comprising a bottom (22) assembled to a hood (21) with five faces, said electrical energy storage elements (3) being held in place and immobilized in the casing (2) by a first resin layer (7) which extends from said bottom (22) over only a portion of the height of said electrical energy storage elements (3), and by a second resin layer (7) which extends from one of the faces of the hood (21) over only a portion of the height of said electrical energy storage elements (3),
- at least one electronic card (4) disposed in a facade element (50), itself attached to one of the faces of said parallelepiped casing (2),
**characterized in that** it comprises the steps of:
- assembling the electrical energy storage element (3) in pairs using connecting bars (30),
- implementing the electrical cabling and installing the insulators so as to form an isolated power block (32),
- placing said power block (32) inside the casing (2),
- assembling the bottom (22) and the hood (21) of said casing (2),
- injecting resin (7) through a first opening of the casing (2) to form said first resin layer (7),
- waiting for the polymerization of the resin,
- turning the module (1) over,
- injecting resin (7) through a second opening of the casing (2) to form a second resin layer (7),
- attaching the facade element (5) containing the electronic card (4) to the casing (2).

2. The method according to claim 1, **characterized in that** it comprises two openings provided in the casing (2) and preferably closing plugs for the two openings and **in that** the injection of the resin (7) is done through the two openings.

3. The method according to claim 2, **characterized in that** the two openings are formed on the front face (210) of the hood (21), one (218) situated in proximity to the bottom (22) and the other (219) situated in proximity to the upper face (212) of the hood (21).

4. The method according to claim 2, **characterized in that** the two openings are formed, one in the bottom (22), the other in the upper face (212) of the hood (21).

5. The method according to one of the preceding claims, **characterized in that** said casing (2) is liquid-tight and dust-tight.

6. The method according to one of the preceding claims, **characterized in that** the casing (2) is made of sheet metal of which the thickness is at most 5 mm.

7. The method according to one of the preceding claims, **characterized in that** the module (1) comprises a core (215), preferably central, forming a spacer, disposed between the bottom (22) and the hood (21), perpendicular to them.

8. The method according to one of the preceding claims, **characterized in that** the resin (7) extends over 5% to 20%, preferably 5% to 12%, of the height of the electrical energy storage elements (3).

9. The method according to one of the preceding claims, **characterized in that** the wall of its casing (2) includes a crenelated surface (216, 217).

10. The method according to one of the preceding claims, **characterized in that** the casing (2) includes, over at least one of its faces, several heat-dissipating elements (223), such as cooling fins, preferably welded to this face.

11. The method according to one of the preceding claims, **characterized in that** the facade element (50) comprises a rear portion (51) and a front portion (52) equipped with assembly means allowing to assemble them to form an enclosure for receiving said electronic card (4), said rear portion (51) being made of an electrically insulating material and being provided with attachment means on one of the faces of the casing (2) and the front portion (52) being made of an electrically conductive material, particularly a metal.

12. The method according to one of the preceding claims, **characterized in that** the facade element (50) is pierced with ports allowing the passage of the output terminals (31), with positive and negative polarity, of said module.
